# EUROPÄISCHE PATENTSCHRIFT

(11) **EP 3 619 111 B1**
(45) Veröffentlichungstag und Bekanntmachung des Hinweises auf die Patenterteilung: **27.09.2023**
(21) Anmeldenummer: 18730740.0
(22) Anmeldetag: 08.06.2018
(51) Int. Cl.: B64C 39/02, G05D 1/10, B66C 13/04, B64D 1/22, B64U 101/60

(54) **VERFAHREN UND VORRICHTUNG ZUM HEBEN EINER LAST**
METHOD AND DEVICE FOR LIFTING A LOAD
PROCÉDÉ ET DISPOSITIF POUR LEVER UNE CHARGE

(30) Priorität: 09.06.2017 DE 102017112765
(43) Veröffentlichungstag der Anmeldung: 11.03.2020
(60) Teilanmeldung: 20182196.4
(73) Patentinhaber: Liebherr-Werk Biberach GmbH, 88400 Biberach an der Riss (DE)
(72) Erfinder: SCHÜTZ, Gebhard, 88486 Kirchberg (DE); BRAMBERGER, Robert, 82293 Mittelstetten / Vogach (DE); SCHOLZ, Tobias, 88400 Biberach (DE)
(74) Vertreter: Thoma, Michael
(86) Internationale Anmeldenummer: PCT/EP2018/065182
(87) Internationale Veröffentlichungsnummer: WO 2018/224657

(56) Entgegenhaltungen:
- WO-A1-2016/068767
- DE-U1-202016 002 295
- US-A1- 2009 299 551
- US-A1- 2016 340 006
- US-B1- 9 079 662
- US-B1- 9 205 922

## Beschreibung

Die vorliegende Erfindung betrifft ein Verfahren und eine Vorrichtung zum Heben einer Last, wobei zumindest eine Flugdrohne zumindest einen Teil der Last trägt.

In jüngerer Zeit wurde angedacht, Lasten mittels Flugdrohnen zu heben und somit Hubaufgaben, die klassischerweise von Kranen ausgeführt wurden, flexibler ausführen zu können, um Beschränkungen und Mühen des Kranbetriebs möglichst zu reduzieren oder gänzlich zu vermeiden.

Das Heben von Lasten durch Flugdrohnen wird beispielsweise in den Schriften US 2009/299551 A1, US 9,079,662 B1, US 92 05 922 B1 und WO 2016/068767 A1 in verschiedenen Facetten beschrieben.

Beispielsweise gibt es im Bereich von Baustellen diverse Hubaufgaben, für die eigens ein Kran angeliefert, aufgebaut, wieder abgebaut und wieder abtransportiert werden muss. Beispielsweise können dies Einzelhübe sein, um bestimmte Bauwerksteile oder Bauwerkzeuge an einen bestimmten Bereich eines zu errichtenden oder umzubauenden Bauwerks zu verbringen. Wenn an der Baustelle ansonsten kein Kran benötigt wird, muss der Kran eigens hierfür aufgebaut werden. Auch wenn an sich ein Kran auf der Baustelle verwendet wird, können solche Sonderhübe anfallen, für die ein weiterer Kran benötigt wird, beispielsweise für das Errichten des stationären, dauerhaften Baukrans.

Bislang wurden Flugdrohnen im Bereich von Baustellen und anderen Kraneinsatzfeldern wie beispielsweise bei Containerkränen oder Hafenkränen vorrangig für akzessorische Hilfsfunktionen eingesetzt, insbesondere um Kameras oder ähnliche bildgebende Überwachungseinrichtungen in Position zu fliegen, um den Kranbetrieb bzw. den Hubvorgang, der vom Kran ausgeführt wird, zu überwachen. Insbesondere kann das von der an der Flugdrohne angebrachten Kamera bereitgestellte Bild auf einem Bildschirm im Kranführerstand angezeigt werden, um dem Kranführer einen anderen Blickwinkel auf den Kranhaken zu geben.

Wenn die Flugdrohne allerdings am Heben der Last beteiligt wird, ist die Steuerung der Flugdrohne anderen Einflüssen ausgesetzt und deutlich schwieriger bzw. komplexer. Insbesondere werden von der Last, mit der die Flugdrohne verbunden ist, beträchtliche Kräfte auf die Flugdrohne ausgeübt, die nicht nur statisch in vertikaler Richtung ziehen, sondern auch horizontale Komponenten aufweisen und beispielsweise durch Windstöße variieren können. Zudem können Pendelbewegungen und damit dynamische Kräfte von der Last her die Flugdrohne rasch in ungewünschte Positionen bringen oder in Bewegungen versetzen.

Die US2016/0340006A1 offenbart ein Verfahren gemäß dem Oberbegriff des Anspruchs 1 und eine Vorrichtung gemäß dem Oberbegriff des Anspruchs 9, wobei eine Flugdrohne gemeinsam mit einem Kran zum Heben einer Last verwendet werden.

Hiervon ausgehend liegt der vorliegenden Erfindung die Aufgabe zugrunde, ein verbessertes Verfahren und eine verbesserte Vorrichtung zum Heben von Lasten mittels einer Flugdrohne zu schaffen, die Nachteile des Standes der Technik vermeiden und Letzteren in vorteilhafter Weise weiterbilden. Insbesondere soll eine einfache Steuerung der Flugdrohne auch unter Einfluss der mit der Flugdrohne verbundenen Last erzielt werden.

Erfindungsgemäß wird die genannte Aufgabe durch ein Verfahren gemäß Anspruch 1 sowie eine Vorrichtung gemäß Anspruch 9 gelöst. Bevorzugte Ausgestaltungen der Erfindung sind Gegenstand der abhängigen Ansprüche.

Es wird also vorgeschlagen, zum Heben der Last zumindest eine Flugdrohne mit einem Lasthaken eines Krans zusammenzuspannen und eine gemeinsame Steuerung für die zumindest eine Flugdrohne und den Lasthaken des Krans vorzusehen, um nicht mehrere Flugdrohnen gleichzeitig bzw. neben dem Kranhaken auch noch eine Flugdrohne mit separaten Steuermitteln sozusagen mehrhändig steuern zu müssen. Die Last wird auf zumindest eine Flugdrohne und einen Kranlasthaken aufgeteilt. Zusätzlich zu der zumindest einen Flugdrohne, die zumindest einen Teil der Last trägt, ist erfindungsgemäß vorgesehen, dass die Last mit einem Lasthaken eines Krans verbunden sowie von dem Kranlasthaken teilweise mitgetragen und dirigiert wird, wobei die zumindest eine Flugdrohne zusammen mit dem Kran von einer gemeinsamen Steuereinrichtung zum Steuern von Flug- und Kranbewegungen aufeinander abgestimmt angesteuert werden.

Wird die Steuereinrichtung beispielsweise betätigt, um den Kranlasthaken zu verfahren, werden gleichzeitig auch darauf abgestimmte Steuersignale für die Flugdrohne generiert, um auch die Flugdrohne entsprechend zu verfliegen. In ähnlicher Weise wird dann, wenn die Steuereinrichtung betätigt wird, um eine Flugdrohne zu verfliegen, automatisch ein darauf abgestimmtes Steuersignal generiert, um die weitere Flugdrohne bzw. den Kranlasthaken in entsprechender Weise zu bewegen.

Wird eine Last durch einen Kran, beispielsweise in Form eines Turmdrehkrans, eines Mobil-Teleskopkrans oder eines Hafenkrans, gehoben, können eine oder mehrere Flugdrohnen gleichzeitig zum Kranhaken an die zu hebende Last angebunden oder auch direkt mit dem Kranhaken verbunden werden, um in verschiedener Weise beim Heben der Last zu helfen. Beispielsweise kann die zu hebende Last für den Kran erleichtert werden, beispielsweise um eine die Tragfähigkeit bzw. Lastkapazität des Krans an sich übersteigende Last heben zu können, so dass der Baustellenbetreiber umhinkommt, einen für diese Hubaufgabe größeren Kran aufzustellen. Die Flugdrohne kann also eine reine Hebefunktion ausführen und zusammen mit einem Kran eine Last anheben.

Alternativ oder zusätzlich kann in Verbindung mit einem Kran die Flugdrohne jedoch auch dazu genutzt werden, die Last zu dirigieren und auf die am Lasthaken angebundene Last eine Kraft auszuüben, die eine horizontale Komponente beinhaltet. Werden beispielsweise längliche Lasten wie Stahlträger oder Ähnliches in horizontaler Ausrichtung angehoben, kann eine außermittig an der länglichen Last angebundene Flugdrohne ein Verdrehen der länglichen Last verhindern bzw. bewußt herbeiführen und beispielsweise dafür sorgen, dass die längliche Last näherungsweise in einer vertikalen Ebene durch den Kranausleger gehoben werden kann und/oder in einer bestimmten Ausrichtung zu dieser Ebene am Bestimmungsort abgesetzt werden kann.

Alternativ oder zusätzlich können per Flugdrohne auf die Last oder den Lasthaken ausgeübte Horizontalkräfte durch entsprechende Steuerung der Flugdrohne dazu genutzt werden, Pendelbewegungen der Last bzw. des Lasthakens relativ zum Kranausleger zu verhindern und/oder zu dämpfen. Insbesondere kann die Flugdrohne derart gesteuert werden, dass sie der Pendelbewegung entgegenwirkende Horizontalkräfte auf den Lasthaken und/oder die daran angehängte Last ausübt.

Alternativ oder zusätzlich hierzu können Horizontalkräfte von der Flugdrohne auf die Last oder den Lasthaken auch ausgeübt werden, um Windkräfte zumindest teilweise zu kompensieren und/oder einen Schrägzug des Hubseils infolge von Windkräften auf die am Lasthaken hängende Last zu minimieren.

Um die genannten Hub- und Dirigierfunktionen auszuführen, kann es ausreichend sein, eine Flugdrohne mit dem Lasthaken des Krans oder der daran befestigten Last zu verbinden. Alternativ können jedoch auch mehrere Flugdrohnen mit der Last oder dem Lasthaken verbunden werden, wobei es beispielsweise vorteilhaft sein kann, zumindest ein Paar Flugdrohnen auf gegenüberliegenden Seiten des Lasthakens zu positionieren und mit der Last bzw. dem Lasthaken selbst zu verbinden, um Horizontalkräfte in einander näherungsweise entgegengesetzte Richtungen auf den Lasthaken bzw. die daran angehängte Last ausüben zu können bzw. gegeneinander kompensieren zu können, wenn beispielsweise nur die Hebefähigkeit der Flugdrohnen benötigt wird.

Neben der genannten Anbindung zumindest einer Flugdrohne an einen Kran kann es für bestimmte Hubaufgaben nicht erfindungsgemäß auch vorteilhaft sein, nur mehrere Flugdrohnen zusammenzuspannen und die entsprechende Last mit mehreren Flugdrohnen, jedoch ohne den Kran bzw. dessen Lasthaken zu heben. Hierdurch kann beispielsweise die Reichweite für eine Hubaufgabe, die bei einem Kran durch dessen Ausladung begrenzt ist, vergrößert werden. Das Heben einer Last nur per Flugdrohnen kann auch beim Aufbau des Krans hilfreich sein, um beispielsweise bestimmte Kranbauteile bei der Kranmontage zu heben.

Werden mehrere Flugdrohnen zusammengespannt und ohne Kran zum Heben einer Last eingesetzt, kann die gemeisame Steuerung die beiden Flugdrohnen auf Abstand voneinander halten und gemeinsam entlang einer bestimmten Flugbahn zu einem Bestimmungsziel fliegen. Die Flugdrohnen können dabei beispielsweise über separate Hubseile an der gemeinsamen Last befestigt werden, oder auch an einem gemeinsamen Hubjoch befestigt werden, an dem wiederum die Last befestigt ist.

Um für die im Baustellenbetrieb schweren Lasten durch die Flugdrohne ausreichende Hubkräfte und Zugkräfte bereitstellen zu können, gleichzeitig aber auch ein ausreichend schnelles Ansprechen der Flugdrohne auf Steuerbefehle und damit eine feinfühlige Steuerung der Hub- und/oder Zugkraft und/oder der Flugbahn der Flugdrohne zu ermöglichen, kann die Flugdrohne in vorteilhafter Weiterbildung der Erfindung einen hydrostatischen Antriebsstrang zum Antreiben zumindest eines Rotors der Flugdrohne aufweisen, wobei ein solcher hydrostatischer Antriebsstrang einen als Pumpe arbeitenden, mit einem Antriebsmotor verbindbaren Hydrostaten sowie einen oder mehrere Hydrostaten umfassen kann, der bzw. die als Motor arbeiten können und mit jeweils einem Rotor verbindbar sind, um diesen anzutreiben und vom als Pumpe arbeitenden Hydrostaten versorgt werden. Durch einen solchen hydrostatischen Antriebsstrang kann das an einem Rotor bereitgestellte Drehmoment und/oder dessen Drehzahl sehr schnell variiert werden, indem eine oder mehrere hydrostatische Stellgrößen wie beispielsweise das Schluckvolumen eines oder mehrerer Hydrostaten und/oder der Verstellwinkel eines oder mehrerer verstellbar ausgebildeter Hydrostaten und/oder der im hydrostatischen System wirkende Druck und/oder der Volumenstrom variiert werden. Dabei steht eine solche schnelle Verstellbarkeit des Drehmoments und/oder der Drehzahl auch dann zur Verfügung, wenn auf einem hohen Leistungsniveau mit großen Drehmomenten und/oder hohen Drehzahlen gearbeitet wird, um hohe Traglasten zu heben.

Werden Flugdrohnen mit mehreren Rotoren beispielsweise in Form sogenannter Multikopter verwendet, ermöglicht ein solches hydrostatisches Antriebssystem die genannte feinfühlige, rasche Steuerbarkeit von Drehmoment und/oder Drehzahl für jeden Rotor individuell. Insbesondere können mehrere Hydrostaten vorgesehen sein, die mit jeweils einem der Rotoren verbunden sind, um den jeweiligen Rotor anzutreiben, sodass durch Verstellen des jeweiligen Hydrostaten - was individuell erfolgen kann - die Drehzahl und/oder das Drehmoment des jeweiligen Rotors individuell verstellt werden kann.

Vorteilhafter Weise kann als Antriebsmotor, der einen als Pumpe arbeitenden Hydrostaten antreibt, als Verbrennungsmotor beispielsweise in Form eines Dieselmotors ausgebildet sein. Durch einen solchen Verbrennungsmotor kann eine ausreichend hohe Leistung auch über längere Betriebszeiten bereitgestellt werden, um für das Heben größerer Lasten ausreichende Tragfähigkeiten der Flugdrohne zu realisieren.

Dabei kann es vorteilhaft sein, den genannten Verbrennungsmotor in einem zumindest näherungsweise stationären Betriebszustand zu betreiben, insbesondere im Wesentlichen mit Vollast, zumindest während eine Hubaufgabe erledigt wird. Die Steuerung der Hub- und/oder Zugkraft und/oder der Flugbahn der Flugdrohne kann durch Verstellen einer hydrostatischen Stellgröße des hydrostatischen Getriebes bzw. des hydrostatischen Antriebsstrangs erfolgen, insbesondere auch ausschließlich durch Verstellen einer oder mehrer hydrostatischer Stellgrößen.

In vorteilhafter Weiterbildung der Erfindung kann eine solche Flugdrohne mit einem hydrostatischen Antriebsstrang mit einer Bodenversorgungsstation zusammenarbeiten, die mit der Flugdrohne gekoppelt werden kann. Insbesondere kann eine solche Versorgungsstation am Boden ein Kühl- und/oder Filtrieraggregat umfassen, das mit dem hydrostatischen Versorgungskreis des hydrostatischen Antriebsstrangs gekoppelt werden und die Hydraulikflüssigkeit des hydrostatischen Antriebsstrangs der Flugdrohne kühlen und/oder filtrieren kann.

Alternativ oder zusätzlich kann die genannte Versorgungsstation auch eine Druckquelle umfassen, die mit dem hydrostatischen Antriebsstrang der Flugdrohne koppelbar ist und den hydrostatischen Antriebsstrang vorspannen kann, insbesondere einen dort gewünschten Soll-Betriebsdruck bereitstellen und/oder einstellen kann.

Um die Steuerung der Flugdrohne an den Kran bzw. an weitere Flugdrohnen in einfacher Weise anzupassen und dem Maschinenführer die Bedienung einfach zu machen, kann die zuvor genannte, gemeinsame Steuereinrichtung eine Hauptsteuereinheit mit Eingabemitteln, von der aus auf Basis der eingegebenen Bewegungswünsche Steuersignale an die zumindest eine Flugdrohne und/oder den Kran generiert und übermittelt werden, sowie eine Zusatzsteuereinheit aufweisen, von der aus Steuerbefehle für zumindest eine weitere Flugdrohne in Abhängigkeit der Flug- oder Kranbewegungen, die von der Hauptsteuereinheit veranlasst wurden, generiert und übermittelt werden. Die genannte Zusatzsteuereinheit kann an die Hauptsteuereinheit angebunden und dazu ausgebildet sein, in Abhängigkeit der von der Hauptsteuereinheit generierten Steuersignale automatisch daran angepasste Steuersignale für die zusätzlich verwendete Flugdrohne zu generieren.

Beispielsweise kann die genannte Zusatzsteuereinheit ein Folgesteuermodul umfassen, mittels dessen die zusätzliche Flugdrohne so gesteuert wird, dass sie den Kranbewegungen und/oder den Flugbewegungen einer Hauptdrohne automatisch folgt, ohne dass der Maschinenführer hierfür eigens Bewegungswünsche für die zusätzliche Flugdrohne eingeben müsste.

Vorteilhafterweise kann die genannte Zusatzsteuereinheit dabei derart ausgebildet sein, dass die zusätzliche Flugdrohne nicht nur eine gewünschte Relativposition relativ zum Kran oder der genannte Hauptdrohne halten kann, sondern dass die genannte Relativposition auch variabel vorgebbar und veränderbar ist, beispielsweise auch dergestalt, dass sich die genannte Relativposition während eines Hebevorgangs kontinuierlich verändert. Beispielsweise kann die Zusatzsteuereinheit für die zusätzliche Flugdrohne einen bestimmten Weg relativ zum Kran vorgeben, den die Flugdrohne während eines Hebevorgangs bzw. in Abhängigkeit der Position des Lasthakens abfliegt. Wird beispielsweise ein länglicher Träger in etwa horizontaler Ausrichtung aus einer zunächst auslegerparallelen Ausgangsstellung angehoben und soll dieser längliche Träger in einer dazu verdrehten, beispielsweise näherungsweise senkrechten Ausrichtung zur vertikalen Ebene durch den Kranausleger am Bestimmungsort abgesetzt werden, kann die Zusatzsteuereinheit für die Flugdrohne einen Flugweg bestimmen, der seinen Ausgangspunkt beispielsweise etwa senkrecht unter dem Kranausleger haben kann und sich dann, um während der Hubbewegung des Lasthakens den länglichen Träger relativ zum Kranausleger zu verdrehen, schraubenförmig um eine Senkrechte durch die Laufkatze des Krans herum erstrecken kann.

Um eine einfache Bedienung der Flugdrohne zu ermöglichen, kann in Weiterbildung der Erfindung die Flugdrohne auch in Abhängigkeit einer Kran- und/oder Lasthakenposition oder einer Position einer weiteren Drohne angesteuert werden derart, dass die Flugdrohne Kran- oder Lasthakenbewegungen und/oder Bewegungen einer Leitdrohne automatisch folgt und eine gewünschte Position relativ zum Kran und/oder dessen Lasthaken und/oder relativ zur Leitdrohne auch bei Kranbewegungen, insbesondere Lasthakenbewegungen, und/oder Leitdrohnenbewegungen zumindest näherungsweise hält bzw. zu halten versucht und nachfährt. Wird die Flugdrohne beispielsweise in Verbindung mit einem Kran verwendet, kann die Flugdrohne bei aktiviertem, automatischem Folgemodus dem Lasthaken des Krans automatisch folgen. Wird beispielsweise eine Relativposition der Flugdrohne etwa auf Lasthakenhöhe bzw. ein Stück weit oberhalb mit seitlicher Beabstandung zur vertikalen Kranmittelebene durch den Ausleger gewünscht und eingestellt, kann die Flugdrohne ihre Flughöhe automatisch erniedrigen oder erhöhen, wenn der Lasthaken abgesenkt oder angehoben wird, und/oder parallel zur vertikalen Kranmittelebene vor- oder zurückfliegen, wenn die Laufkatze des Krans verfahren wird und/oder seitlich quer nach links oder rechts fliegen, wenn der Kran verdreht wird.

Vorteilhafterweise kann die Flugdrohne jedoch auch autonom ferngesteuert werden derart, dass von der Flugdrohne verschiedene gewünschte Positionen relativ zum Kran und/oder zur Leitdrohne frei angeflogen werden können. Dies kann beispielsweise durch Eingeben einer Wunschposition für die Flugdrohne relativ zum Lasthaken erfolgen, beispielsweise dergestalt, dass in einem Positionssteuerungsmodul, das in der Kranführerkabine oder einem Führerstand oder einem Fernsteuerstand vorgesehen sein kann, eine Position in Bezug auf den Lasthaken eingegeben wird, beispielsweise in Form "2 m oberhalb seitlich rechts vom Lasthaken". Alternativ oder zusätzlich kann jedoch die Flugdrohne auch gänzlich frei gegenüber dem Kran oder einer Leitdrohne verflogen werden, beispielsweise mit Hilfe eines Joysticks, um die Flugdrohne so lange zu verfliegen, bis eine gewünschte Relativposition erreicht ist. In einem Automatikmodus kann die gemeinsame Steuervorrichtung die angeflogenen Reltivposition dann automatisch halten oder zu halten versuchen und etwaigen Hubbewegungen des Lasthakens oder der Leitdrohne folgen.

Um die Flugdrohne relativ zum Kranlasthaken bzw. relativ zur Leitdrohne positionieren und dessen/deren Bewegungen automatisch nachfahren zu können, kann die Flugdrohne in einem relativen, kranfesten oder leitdrohnenfesten Koordinatensystem positionsgesteuert werden. Hierzu kann eine Positionsbestimmungseinrichtung vorgesehen sein, die die Flugposition der Flugdrohne relativ zum Kran und/oder zur Leitdrohne kontinuierlich oder zyklisch bestimmt, wobei eine solche Positionsbestimmungseinrichtung beispielsweise eine Signal-Ortungseinrichtung aufweisen kann, die von der Flugdrohne kommende und/oder an die Flugdrohne gesendete Signale orten und/oder hinsichtlich bestimmter Signaleigenschaften auswerten kann, um hieraus die Relativposition der Flugdrohne zum Lasthaken bzw. zur Leitdrohne zu bestimmen.

Eine solche Signal-Ortungseinrichtung kann beispielsweise dergestalt realisiert sein, dass an dem Kran bzw. der Leitdrohne mehrere Sende-Empfangseinheiten angebracht werden, die mit einer Sende-Empfangseinheit an der Flugdrohne kommunizieren, so dass aus den Signallaufzeiten und/oder Signalstärken und/oder Signalrichtungen im Sinne der Verbindungslinien zwischen den verschiedenen kran- bzw. maschinenseitigen Sende-/Empfangseinheiten zu der Sende-/Empfangseinheit der Flugdrohne deren Position relativ zum Kran bzw. der Leitdrohne bestimmt werden kann.

Die genannten Sende-/Empfangseinheiten können beispielsweise Transponder oder Nahbereichs-Sende-/Empfangseinheiten sein. Im Falle eines Krans können die genannten Sende-/Empfangseinheiten beispielsweise am Ausleger, an der Laufkatze, am Turm und/oder am Lasthaken selbst angebracht sein. Insbesondere können die Signallaufzeiten von der jeweiligen Sende-/Empfangseinheit am Kran bzw. der Maschine zu der Flugdrohne und/oder zurück von der Flugdrohne zu der maschinenseitigen Sende-/Empfangseinheit bestimmt und/oder Signalstärken erfasst und/oder die Richtungen, in denen maximale Signalstärken auftreten, bestimmt werden, um aus den Signallaufzeiten und/oder Signalstärken und/oder Signalrichtungen maximaler Signalstärke die Position der Flugdrohne relativ zum Kran zu bestimmen.

Alternativ oder zusätzlich zu einer solchen relativen Positionsbestimmung in einem maschinenfesten Koordinatensystem können auch die Positionen der Flugdrohne einerseits und des Krans, insbesondere des Lasthakens, bzw. der Leitdrohne andererseits jeweils in einem absoluten Koordinatensystem bestimmt werden, so dass aus den beiden Absolutpositionen wiederum die Relativposition bestimmt werden kann und in der zuvor beschriebenen Weise beispielsweise die Flugdrohne derart angesteuert werden kann, dass die Flugdrohne einem Lasthaken bzw. einer Leitdrohne und dessen/deren Bewegungen automatisch folgt bzw. zu folgen versucht.

Die genannte absolute Positionsbestimmung kann beispielsweise mittels eines Ortungssystems, beispielsweise einem GPS-System erfolgen. Beispielsweise kann die Flugdrohne einerseits und der Lasthaken andererseits jeweils mit einer GPS-Einheit ausgestattet sein, um einerseits die absolute Raumposition des Lasthakens und andererseits die absolute Raumposition der Flugdrohne zu bestimmen. Die Raumposition des Lasthakens kann näherungsweise aber auch aus den bekannten Bewegungs- und/oder Stellungsdaten der Arbeitsmaschinenkomponenten wie beispielsweise dem Drehwinkel eines Turmdrehkrans, der Laufkatzenstellung und der Lasthaken-Höhe bestimmt werden, aus denen bei bekanntem Aufstellort zumindest näherungsweise, insbesondere unter Vernachlässigung von Pendelbewegungen und/oder Windeinflüssen, die Lasthakenposition bestimmbar sind.

In vorteilhafter Weiterbildung der Erfindung kann die Positionssteuerung der Flugdrohne auch in Abhängigkeit von Arbeitsbereichsbegrenzungen und/oder Baustellen-Modelldaten und/oder Hinderniserfassungs-Daten, die an der Flugdrohne selbst gewonnen werden können, gesteuert werden. Wird die Flugdrohne beispielsweise in dem zuvor beschriebenen automatischen Folgemodus betrieben, in der die Flugdrohne dem Lasthaken eines Krans automatisch folgt, könnte es beispielsweise dazu kommen, dass bei Verdrehung des Krans um seine aufrechte Turmachse die Flugdrohne seitlich quer mitfliegt, um die Position zum Lasthaken zu halten, und dabei in Kollision mit einem Gebäudeteil kommt, obwohl der Lasthaken selbst das Gebäudeteil noch nicht erreicht. Um dies zu verhindern, kann die Positionssteuervorrichtung der Flugdrohne Arbeitsbereichsbegrenzungen und/oder Baustellen-Modelldaten berücksichtigen und/oder selbst eine Hinderniserkennung beispielsweise mittels eines Radar- oder Ultraschallsensors aufweisen, um Hindernisse erkennen zu können. Die automatische Folgesteuerung kann dann übersteuert und der automatische Folgemodus außer Kraft gesetzt werden, wenn eine Arbeitsbereichsbegrenzung und/oder ein Gebäudeteil aus dem Baustellen-Modelldatensatz oder ein Hindernis erreicht wird. Vorteilhafterweise kann die Flugdrohne dann auch automatisch eine Alternativroute berechnen, die der Arbeitsbereichsbegrenzung Rechnung trägt und/oder einem Hindernis ausweicht, wobei die Ausweichroute vorteilhafterweise derart bestimmt wird, dass der Lasthaken bzw. das Arbeitswerkzeug im Blickfeld der bildgebenden Sensorik der Flugdrohne bleibt.

Alternativ oder zusätzlich zu der genannten Positionssteuerung kann die gemeinsame Steuereinrichtung auch ein Hub- und/oder Zugkraft-Steuermodul umfassen, mittels dessen bestimmte Betriebparameter der Flugdrohne wie bspw. Rotordrehzal und/oder -anstellwinkel so gesteuert werden, dass ein Lastaufnahmemittel an der Flugdrohne, bspw. ein Hubseil, das die Drohne mit der Last oder dem Lasthaken verbindet, mit einer gewünschten Kraft beaufschlagt wird, insbesondere mit einem bestimmten Kraftbetrag und/oder einer bestimmten Kraftrichtung beaufschlagt wird. Beispielsweise kann die Zugspannung und/oder die Neigung des Hubseils, das die Drohne mit der Last verbindet, gegenüber der Horizontalen mittels einer geeigneten Sensorik überwacht und in Abhängigkeit hiervon die Flugdrohne angesteuert werden, um die Last mittels der Drohne in eine bestimmte Richtung mit einer bestimmten Stärke bzw. Kraft zu ziehen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines Krans in Form eines Turmdrehkrans mit einer am Lasthaken angeschlagenen Last sowie einer zusätzlichen, mit der Last verbundenen Flugdrohne,
- Fig. 2:: eine schematische Darstellung einer nicht erfindungsgemäßen Ausführung zweier zusammengespannter, mit einer gemeinsamen Last verbundenen Flugdrohnen,
- Fig. 3:: eine Frontalansicht des Krans aus Fig. 1 in einer Blickrichtung parallel zur Auslegerlängsachse, wobei zwei auf gegenüberliegenden Seiten des Lasthakens positionierte Flugdrohnen dargestellt sind, die mit der am Lasthaken angeschlagenen Last verbunden sind,

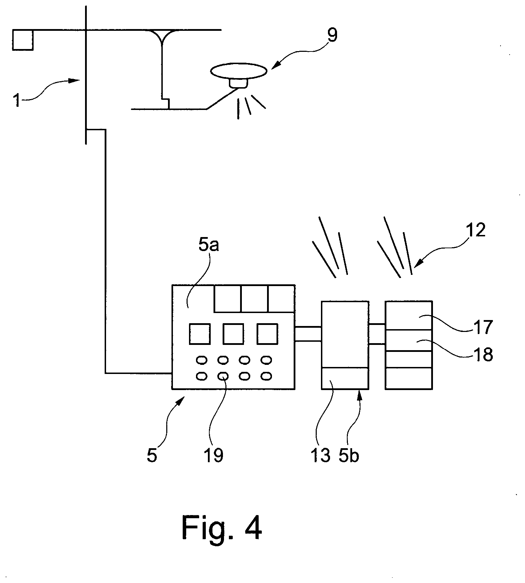

- Fig. 4:: eine schematische Darstellung der gemeinsamen Steuereinrichtung zum Steuern eines Krans und der zusätzlichen Flugdrohnen zum gemeinsamen Heben einer Last, und
- Fig. 5:: eine schematische Darstellung des hydraulischen Antriebsstrangs einer Flugdrohne nach einer vorteilhaften Ausführung der Erfindung, wobei weiterhin eine Versorgungsstation, an die die Flugdrohne mit dem hydrostatischen Antriebsstrang ankoppelbar ist, dargestellt ist, mittels derer der hydrostatische Antriebsstrang vorgespannt, gekühlt und filtriert werden kann,
- Fig. 6:: eine schematische Darstellung der auf zwei Ebenen verteilten, insgesamt acht Rotoren einer Flugdrohne, die ebenenweise und in einer Ebene seitenweise unterschiedliche Drehrichtungen realisieren, und
- Fig. 7:: eine schematische Darstellung der Steuerungshierarchie zum Steuern einer Flugdrohne.

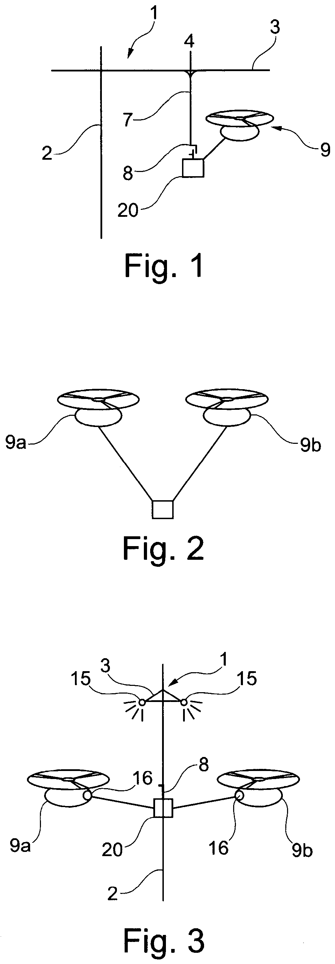

Wie Fig. 1 zeigt, kann der Kran 1 als Turmdrehkran ausgebildet sein, dessen Turm 2 einen Ausleger 3 trägt, an dem eine Laufkatze 4 verfahrbar gelagert ist. Der Ausleger 3 kann zusammen mit dem Turm 2 oder auch ohne den Turm 2 - je nach Ausbildung des Krans als Oben- oder Unterdreher - um eine aufrechte Achse verdreht werden, wozu ein Drehwerksantrieb vorgesehen ist. Der Ausleger 3 könnte ggf. auch auf- und niederwippbar um eine liegende Querachse ausgebildet sein, wobei ein geeigneter Wippantrieb beispielsweise im Zusammenspiel mit der Auslegerabspannung vorgesehen sein könnte. Die genannte Laufkatze 4 kann mittels einer Katzfahrwinde oder eines anderen Katzfahrantriebs verfahren werden.

Die genannten Antriebsvorrichtungen können von einer Steuervorrichtung 5 angesteuert werden, die eine stationäre Bedieneinheit mit geeigneten Eingabemitteln 19 beispielsweise in Form von Joysticks in der Kranführerkabine 6 bzw. am Steuerstand des Krans oder einem Fernsteuerstand umfassen kann und/oder auch eine mobile Bedieneinheit mit entsprechenden Eingabemitteln aufweisen kann. Eine solche mobile Bedieneinheit kann beispielsweise in Form einer Funkfernsteuerung ausgebildet sein, die der Kranführer bei sich tragen kann, wenn er im Kranarbeitsbereich über die Baustelle läuft, um den Kran auch außerhalb der Kranführerkabine 6 steuern zu können.

Um den Lasthaken 8, der mit einem von der Laufkatze 4 ablaufenden Hubseil 7 verbunden sein kann, oder eine daran aufgenommene Last 20 im Zusammenspiel mit dem Lasthaken 8 manipulieren zu können, ist erfindungsgemäß zumindest eine Flugdrohne 9 vorgesehen, die mit der Last 20 und/oder mit dem Lasthaken 8 durch ein Zug- und/oder Schubmittel, insbesondere ein Hubseil oder eine Schubstange, verbunden wird.

Um zusätzlich zum Manipulieren der Last einen besseren Überblick über die Manipulationsaufgabe zu geben, kann an der Flugdrohne zumindest eine Kamera montiert ist, mittels derer ein Kamerabild vom Lasthaken 8 und/oder der Lasthakenumgebung bereitgestellt werden kann. Das genannte Kamerabild ist vorteilhafterweise ein Live- oder Echtzeitbild im Sinne eines Fernseh- oder Videobilds und wird von der Kamera 10 der Flugdrohne 9 drahtlos zu einer Anzeigeeinheit und/oder der Steuervorrichtung 5 des Krans 1 übertragen, wobei die genannte Anzeigeeinheit beispielsweise ein Maschinenführerdisplay nach Art eines Tablets oder eines Bildschirms oder eines Monitors sein kann, der in der Kranführerkabine 6 montiert sein kann. Wird in der zuvor genannten Weise ein Fernsteuerstand oder eine mobile Bedieneinheit zum Steuern des Krans 1 verwendet, kann die genannte Anzeigeeinheit 11 in dem Fernsteuerstand oder an der mobilen Bedieneinheit vorgesehen sein.

Die Flugdrohne 9 ist mit einer Fernsteuereinrichtung 12 versehen, die es erlaubt, die Flugdrohne 9 fernzusteuern, insbesondere die Flugsteueraggregate wie beispielsweise Rotorblätter anzusteuern, um die Flugposition der Flugdrohne 9 fernzusteuern.

Ein entsprechendes Fernsteuermodul ist vorteilhafterweise in die Steuereinrichtung 5 integriert und/oder kann in der Kranführerkabine 6 und/oder dem Fernsteuerstand oder der mobilen Bedieneinheit vorgesehen sein, beispielsweise mit entsprechenden Joysticks ausgestattet sein.

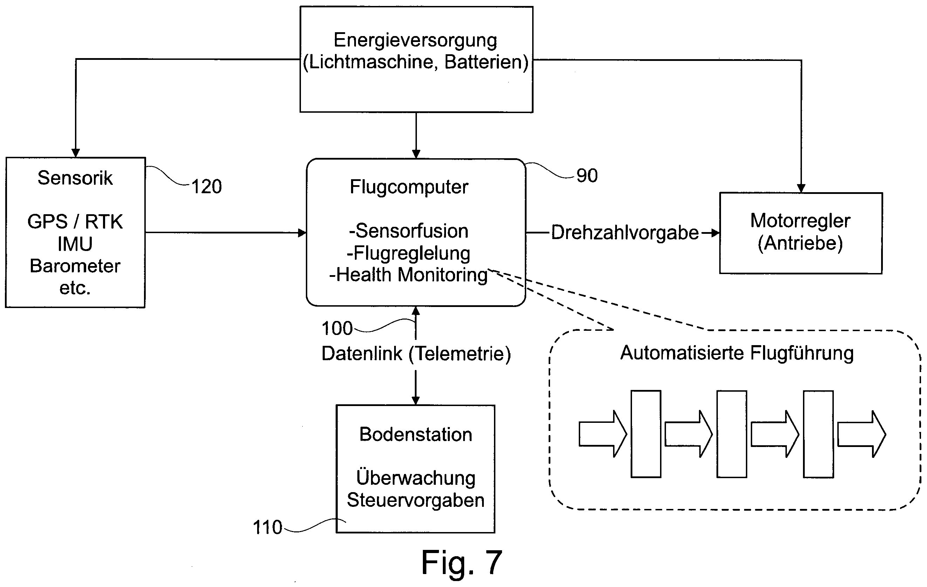

Wie Fig. 7 zeigt, kann die Steuerung der Flugdrohne 9a; 9b einen Flugcomputer 90 umfassen, der an der Flugdrohne vorgesehen sein kann und beispielsweise einen oder mehrere Mikroprozessoren, einen oder mehrere Programmspeicher und weitere Hardware- und/oder Softwarekomponenten umfassen kann, um ein Flugsteuerungsprogramm abzuarbeiten. Wie Fig. 7 weiterhin zeigt, kann der genannte Flugcomputer 90 über eine Kommunikationsverbindung 100, beispielsweise eine Funkverbindung, mit einer Bodenstation 110 kommunizieren, um Daten vom Flugcomputer 90 and die Bodenstation 110 oder umgekehrt von der Bodenstation 110 an den Flugcomputer 90 zu übermitteln. Beispielsweise können Telemetriedaten wie GPS-Position, Rotordrehzahl, Hubkraft und andere Drohnenparameter vom Flugcomputer 90 and die Bodenstation 110 übermittelt werden, um dort überwacht und/oder ausgewertet zu werden. Alternativ oder zusätzlich können von der Bodenstation 110 Daten wie beispielsweise Steuersignale an den Flugcomputer 90 übermittelt werden, um dort die Steuerung der Flugdrohne zu beeinflussen.

Der besagte Flugcomputer 90 kann hierbei von einer an der Flugdrohne 9a; 9b vorgesehenen Sensorik 120 mit Sensorsignalen versorgt werden, die einen aktuellen Betriebszustand der Flugdrohne und/oder Bewegungsparameter angeben, beispielsweise ein Positionssignal wie beispielsweise eine GPS-Position, Luftdruck, Windgeschwindigkeit, Kompassdaten oder Ähnliches.

Anhand der Sensordaten der Sensorik 120 und/oder anhand der von der Bodenstation 110 erhaltenen Daten kann der Flugcomputer 90 eine Flugregelung und/oder -steuerung ausführen bzw. abarbeiten und Antriebe der Flugdrohne ansteuern, insbesondere um eine Drehzahl und/oder ein Drehmoment eines jeweiligen Rotors zu variieren.

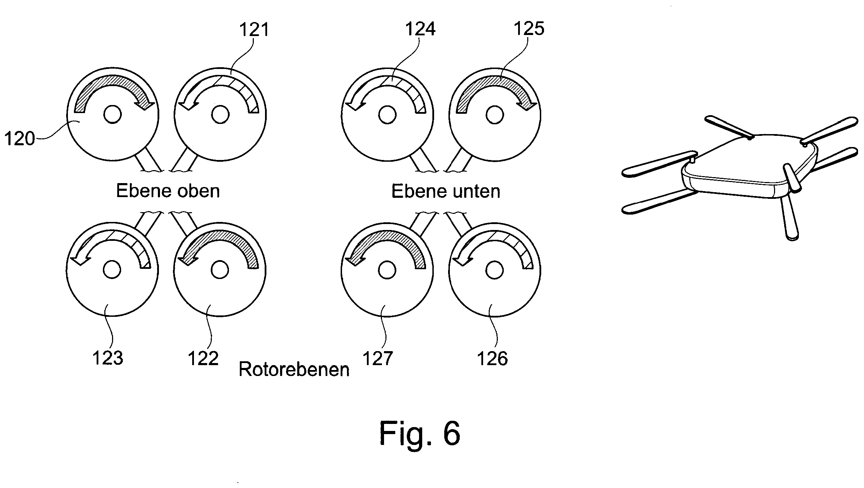

Wie Fig. 6 zeigt, kann die Flugdrohne 9a; 9b mehrere Rotoren 120 bis 127 aufweisen, die beispielsweise in zwei Ebenen übereinander liegend angeordnet und in jeder Ebene kreuzweise angeordnet sein können. Vorteilhafter Weise sind dabei die Antriebe der Rotoren 120 bis 126 und/oder deren Antriebsgetriebe derart konfiguriert, dass in einer Ebene gegenüberliegende Rotoren - also beispielsweise 120 und 122 sowie 121 und 123 jeweils richtungsgleich drehen, nebeneinanderliegende Rotoren allerdings entgegengesetzt drehen. Dabei können die Drehrichtungen in den beiden Rotorebenen umgedreht sein, sodass ein übereinander/untereinander liegendes Paar von Rotoren den beiden Rotorebenen gegenläufig drehen, vgl. Fig. 6.

Bei einem solchen Multikopter kann die Flugbewegung und/oder die bereitgestellte Traglast bzw. Hub- und/oder Zuglast gezielt durch die Schubverteilung an den Rotoren gesteuert werden, insbesondere indem die Drehzahlen an den einzelnen Rotoren 120 bis 126 und/oder deren Drehmoment individuell, paarweise oder gruppenweise variiert wird, um ein Steigen und/oder Sinken der Flugdrohne 9a, 9b und/oder ein Nicken und/oder Rollen und/oder Gieren herbeizuführen.

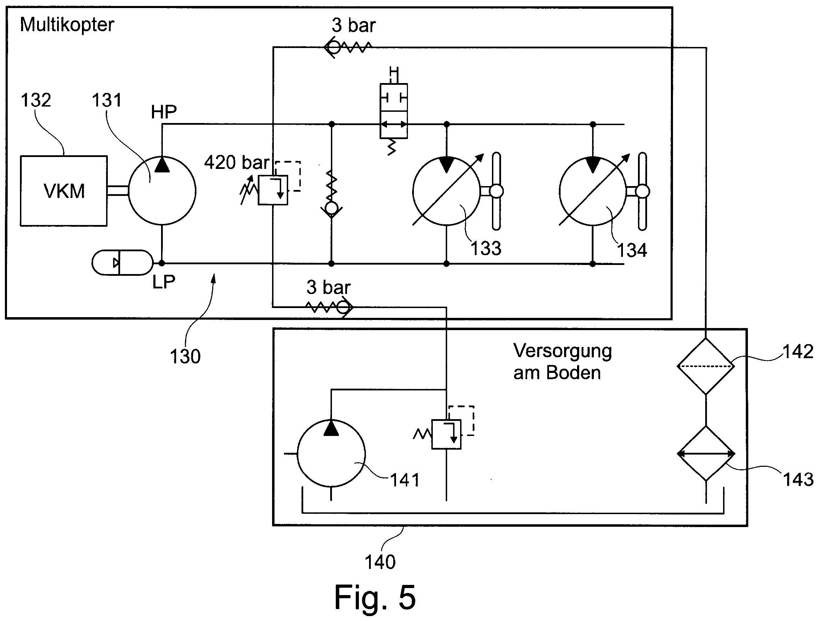

Wie Fig. 5 zeigt, kann die Flugdrohne 9a; 9b hierbei vorteilhafter Weise einen hydraulischen Antriebsstrang 130 zum Antreiben der Rotoren 120 bis 127 aufweisen, wobei der hydraulische Antriebsstrang 130 bzw. das hydrostatische Getriebe einen als Pumpe arbeitenden Hydrostaten 131 umfassen kann, der von einem Antriebsmotor 132 angetrieben werden kann. Der genannte Antriebsmotor 131 kann vorteilhafter Weise als Verbrennungskraftmaschine VKM ausgebildet sein, beispielsweise in Form eines Dieselmotors oder eines Benzinmotors oder eines Gasverbrennungsmotors.

Der hydrostatische Antriebsstrang 130 umfasst weiterhin vorteilhafter Weise mehrere weitere Hydrostaten 133 und 134, die jeweils mit einem der Rotoren 120 bis 127 antriebsverbunden sind und von dem als Pumpe arbeitenden Hydrostaten 131 her versorgt werden können. In der Fig. 5 sind dabei nur zwei als Motor arbeitende Hydrostaten 133 und 134 gezeigt. Es versteht sich jedoch, dass weitere solche als Motor arbeitende Hydrostaten vorgesehen werden können, um die einzelnen Rotoren jeweils antreiben zu können, die die Flugdrohne 9a; 9b besitzt. Solche weiteren Hydrostaten können insbesondere in Parallelschaltung zu den gezeigten Hydrostaten 133 und 134 mit den Versorgungs- und Rückleitungen verbunden sein, die an den als Pumpe arbeitenden Hydrostaten 131 angeschlossen sind.

Vorteilhafter Weise sind die genannten Hydrostaten 131, 133 und 134 jeweils als verstellbare Hydrostaten ausgebildet, deren Schluckvolumen bzw. Pumpleistung variiert werden können. Beispielsweise können Schrägscheibenaggregate Verwendung finden, die im Verstellwinkel einstellbar ausgebildet sind.

Um das Drehmoment und/oder die Drehzahl des jeweiligen Rotors 120 bis 127 zu steuern und/oder zu regeln, kann insbesondere folgendermaßen vorgegangen werden: Vorteilhafter Weise kann der Antriebsmotor 132 zumindest näherungsweise konstant betrieben werden, beispielsweise unter Volllast oder zumindest näherungsweise unter Voillast oder in einem hinsichtlich des Wirkungsgrades günstigen Betriebsbereich. Der von dem Verbrennungsmotor 132 angetriebene Hydrostat 131 setzt die rotatorische Antriebsbewegung des Antriebsmotors 132 in Hydraulikdruck um, der die weiteren Hydrostaten 133, 134 versorgt. Durch Verstellen der genannten Hydrostaten 133 und 134 kann das Drehmoment und/oder die Drehzahl der damit antriebsverbundenen Rotoren variiert werden. Alternativ oder zusätzlich können aber auch weitere hydraulische Stellglieder im hydrostatischen Antriebsstrang Verwendung finden, um die Rotoren zu steuern, beispielsweise über Drucksteuerventile, Massenstromdrosseln etcetera.

Wie Fig. 5 weiterhin zeigt, kann vorteilhafter Weise die Flugdrohne 9a, 9b mit einer Versorgungsstation 140, die am Boden oder auch an anderer Stelle, beispielsweise am Kran installiert sein kann, gekoppelt werden, um den hydrostatischen Antriebsstrang der Flugdrohne zu kühlen und/oder zu filtrieren und/oder im Druck vorzuspannen. Wie Fig. 5 zeigt, kann die Versorgungsstation 140 eine Druckquelle 141 aufweisen, die mit dem hydrostatischen Antriebsstrang beispielsweise über ein Rückschlagventil und/oder ein Sperrventil koppelbar ist, um den hydrostatischen Druckkreis auf einen gewünschten Sollbetriebsdruck vorzuspannen.

Alternativ oder zusätzlich kann die Versorgungsstation eine Filtriereinrichtung 142 und/oder eine Kühlvorrichtung 143 umfassen, die ebenfalls mit dem hydrostatischen Antriebsstrang verbindbar ist/sind, um das Hydrauliköl zu filtrieren und/oder zu kühlen, wenn die Flugdrohne an die Versorgungsstation 140 angekoppelt ist.

Um eine einfache Bedienung zu ermöglichen, kann die gemeinsame Steuereinrichtung 5 eine Hauptsteuereinrichtung 5a mit Eingabemitteln 19 zum Eingeben von Flug- und/oder Kranbewegungswünschen, von der aus auf Basis der eingegebenen Bewegungswünsche Steuersignale an die zumindest eine Flugdrohne 9a und/oder den Kran 1 generiert und übermittelt werden, und eine Zusatzsteuereinrichtung 5b aufweisen, von der aus Steuerbefehle für die zumindest eine und/oder die weitere Flugdrohne 9a; 9b in Abhängigkeit der Flug- oder Kranbewegungen, die von der Hauptsteuereinrichtung 5a veranlasst wurden, generiert und übermittelt werden.

Vorteilhafterweise kann die Position der Flugdrohne 9 relativ zum Kran 1 und/oder dessen Lasthaken zumindest in einem autonomen Steuerungsmodus weitgehend autonom und unabhängig vom Kran gesteuert werden, beispielsweise in an sich bekannter Weise über die genannten Joysticks der Fernsteuereinrichtung 12. Über das autonome Steuerungsmodul der Positionssteuervorrichtung 13 kann eine Wunschposition der Flugdrohne 9 relativ zum Lasthaken 8 angeflogen werden.

Zusätzlich zu einem solchen autonomen Positionssteuermodul kann die gemeinsame Steervorrichtung 5 bzw. deren Zusatzsteuereinrichtung 5b, insbesondere deren Positionssteuervorrichtung 13 ein automatisches Folgesteuerungsmodul aufweisen, um eine vorbestimmte Position der Flugdrohne 9 - beispielsweise die durch das autonome Positionssteuermodul willkürlich angeflogene Wunschposition und/oder eine vorbestimmte, vorprogrammierte Position - zu halten, auch wenn der Kran 1 Kranbewegungen ausführt und/oder der Lasthaken 8 bewegt wird, so dass die Flugdrohne 9 dem Lasthaken 8 weitgehend automatisch folgt und die vorbestimmte Relativposition hierzu hält.

Vorteilhafterweise ist eine Positionsbestimmungseinrichtung 18 vorgesehen, die automatisch kontinuierlich oder zyklisch die Position der Flugdrohne 9 relativ zu dem Kran 1 und/oder dessen Lasthaken 8 bestimmt, so dass die Positionssteuervorrichtung 13 in Abhängigkeit der bestimmten Relativposition die Flugdrohne 9 ansteuern kann.

Die Flugdrohne 9 kann hierzu beispielsweise eine GPS-Einheit 14 umfassen, mittels derer die absolute Raumposition der Flugdrohne 9 bestimmt und der Positionssteuervorrichtung 13 übermittelt wird. Andererseits kann die Position des Lasthakens 8 bestimmt werden, so dass die Positionssteuervorrichtung 13 die Flugdrohne 9 fernsteuern kann, um die Relativposition zu halten.

Die Lasthakenposition kann hierbei grundsätzlich ebenfalls per GPS bestimmt werden, beispielsweise indem in den Lasthaken eine GPS-Einheit integriert wird. Alternativ oder zusätzlich kann jedoch die Lasthakenposition auch aus der Stellung der Krankomponenten bestimmt, insbesondere von der Steuervorrichtung 5 des Krans berechnet werden, beispielsweise indem der Drehwinkel des Auslegers, die Position der Laufkatze 4 am Ausleger 3 und die Abspullänge des Hubseils 7 erfasst werden, woraus sich bei bekanntem Aufstellort des Krans 1 die Lasthakenposition zumindest näherungsweise bestimmen lässt, wenn man dynamische Pendelbewegungen oder Windeinflüsse vernachlässigt.

Alternativ oder zusätzlich zu einer solchen absoluten Positionsbestimmung kann die Position der Flugdrohne 9 auch relativ in einem kranfesten, d.h. sich mit dem Kran mitdrehenden Koordinatensystem bestimmt werden. Hierzu können an dem Kran 1, beispielsweise an dessen Ausleger 3 und dessen Turm 2, ggf. auch an dessen Laufkatze 4 und/oder dessen Lasthaken 8 Sende-/Empfangseinheiten beispielsweise in Form von Transpondereinheiten 15 vorgesehen sein, die vorteilhafterweise an mehreren, voneinander beabstandeten Stellen am Kran 1 angebracht sind. Die genannten Sende-/Empfangseinheiten 15 können mit einer entsprechenden Sende-/Empfangseinheit 16 an der Flugdrohne 9 kommunizieren. Beispielsweise kann dann von einer Ortungseinrichtung 17, die in die Steuervorrichtung 5 des Krans 1 integriert sein kann, aus den Signallaufzeiten eines Signals zwischen der Sende-/Empfangseinheit 16 an der Flugdrohne 9 und den jeweiligen Sende-/Empfangseinheiten 15 am Kran 1 die Abstände der Flugdrohne 9 von den jeweiligen Sende-/Empfangseinheiten 15 am Kran 1 und hieraus die Position der Flugdrohne 9 relativ zum Kran 1 bestimmt werden.

Zusätzlich zu der genannten Positionssteuerung kann die gemeinsame Steuereinrichtung 5 auch ein Hub- und/oder Zugkraft-Steuermodul umfassen, mittels dessen bestimmte Betriebparameter der Flugdrohne 9a bzw. 9b wie bspw. Rotordrehzal und/oder -anstellwinkel so gesteuert werden, dass das Lastaufnahmemittel an der Flugdrohne, bspw. ein Hubseil, das die Drohne mit der Last 20 oder dem Lasthaken 8 verbindet, mit einer gewünschten Kraft beaufschlagt wird, insbesondere mit einem bestimmten Kraftbetrag und/oder einer bestimmten Kraftrichtung beaufschlagt wird.

Beispielsweise kann die Zugspannung und/oder die Neigung ϕ des genannten Hubseils, das die Drohne 9 mit der Last 20 verbindet, gegenüber der Horizontalen mittels einer geeigneten Sensorik überwacht und in Abhängigkeit hiervon die Flugdrohne angesteuert werden, um die Last 20 mittels der Drohne 9 in eine bestimmte Richtung mit einer bestimmten Stärke bzw. Kraft zu ziehen.

Wie Fig. 3 zeigt, können auch mehrere Flugdrohnen 9a und 9b mit der Last 20 oder dem Lasthaken 8 verbunden werden, wobei es beispielsweise vorteilhaft sein kann, zumindest ein Paar Flugdrohnen 9a, b auf gegenüberliegenden Seiten des Lasthakens 8 zu positionieren und mit der Last 20 bzw. dem Lasthaken 8 selbst zu verbinden, um Horizontalkräfte F_{H} in einander näherungsweise entgegengesetzte Richtungen auf den Lasthaken 8 bzw. die daran angehängte Last 20 ausüben zu können bzw. gegeneinander kompensieren zu können, wenn beispielsweise nur die Hebefähigkeit der Flugdrohnen 9a, b benötigt wird.

Neben der genannten Anbindung zumindest einer Flugdrohne 9 an einen Kran 1 kann es für bestimmte Hubaufgaben nach einer nicht erfindungsgemäßen Ausführung auch vorteilhaft sein, nur mehrere Flugdrohnen 9a und 9b zusammenzuspannen und die entsprechende Last mit mehreren Flugdrohnen, jedoch ohne den Kran bzw. dessen Lasthaken zu heben, wie dies bspw. Fig. 2 zeigt. Hierdurch kann beispielsweise die Reichweite für eine Hubaufgabe, die bei dem Kran 1 durch dessen Ausladung begrenzt ist, vergrößert werden. Das Heben einer Last 20 nur per Flugdrohnen kann auch beim Aufbau des Krans 1 hilfreich sein, um beispielsweise bestimmte Kranbauteile bei der Kranmontage zu heben.

Werden mehrere Flugdrohnen 9a, b zusammengespannt und ohne Kran zum Heben einer Last 20 eingesetzt, kann die gemeisame Steuereinrichtung 5 die beiden Flugdrohnen 9a und 9b auf Abstand voneinander halten und gemeinsam entlang einer bestimmten Flugbahn zu einem Bestimmungsziel fliegen. Die Flugdrohnen 9 a, b können dabei beispielsweise über separate Hubseile an der gemeinsamen Last befestigt werden, oder auch an einem gemeinsamen Hubjoch befestigt werden, an dem wiederum die Last 20 befestigt ist.

## Patentansprüche

1. Verfahren zum Heben einer Last (20), bei dem zumindest eine Flugdrohne (9) zumindest einen Teil der Last (20) trägt, wobei die Last (20) mit einem Lasthaken (8) eines Krans (1) verbunden sowie von dem Kran (1) teilweise getragen und dirigiert wird, **dadurch gekennzeichnet, dass** die zumindest eine Flugdrohne (9a) zusammen mit dem Kran (1) von einer gemeinsamen Steuereinrichtung (5) zum Steuern von Flug- und Kranbewegungen aufeinander abgestimmt angesteuert werden.

2. Verfahren nach dem vorhergehenden Anspruch, wobei die gemeinsame Steuereinrichtung (5) eine Hauptsteuereinrichtung (5a) mit Eingabemitteln (19) zum Eingeben von Flug- und/oder Kranbewegungswünschen, von der aus auf Basis der eingegebenen Bewegungswünsche Steuersignale an die zumindest eine Flugdrohne (9a) und/oder den Kran (1) generiert und übermittelt werden, und eine Zusatzsteuereinrichtung (5b) aufweist, von der aus Steuerbefehle für die zumindest eine Flugdrohne (9a; 9b) in Abhängigkeit der Flug- oder Kranbewegungen, die von der Hauptsteuereinrichtung (5a) veranlasst wurden, generiert und übermittelt werden.

3. Verfahren nach einem der vorhergehenden Ansprüche, wobei eine Hub- und/oder Zugkraft und/oder eine Flugbahn der Flugdrohne (9a; 9b) durch Variation einer Rotordrehzahl und/oder eines Rotordrehmoments gesteuert wird, wobei die Flugdrohne (9a; 9b) einen hydrostatischen Antriebsstrang (130) zum Antreiben zumindest eines Rotors (120-127) umfassend zumindest einen als Pumpe arbeitenden Hydrostaten (131), der von einem Antriebsmotor (132) antreibbar ist, und zumindest einen weiteren als Motor arbeitenden Hydrostaten (133, 134), der mit dem Rotor verbindbar ist, aufweist und die genannte Rotordrehzahl und/oder das Rotordrehmoment durch Verstellen einer hydraulischen Stellgröße des hydrostatischen Antriebsstrangs (130), insbesondere eines Hydrostaten-Schluckvolumens und/oder eines Hydrostaten-Schwenkwinkels und/oder eines Drucks im hydrostatischen Druckkreis und/oder eines Massenstroms im Hydrostatischen Druckkreis, gesteuert wird.

4. Verfahren nach dem vorhergehenden Anspruch, wobei als Antriebsmotor (132) ein Verbrennungsmotor verwendet und in einem zumindest näherungsweise konstanten Betriebszustand, insbesondere zumindest näherungsweise im Volllastbereich, gefahren wird, wobei Drehzahländerungen und/oder Drehmomentänderungen am Rotor durch Verstellen des zumindest einen Hydrostaten (133, 134; 131) variabel gesteuert wird, wobei die Flugdrohne (9a; 9b) als Multikopter ausgebildet ist und mehrere Rotoren aufweist, die jeweils von einem Hydrostaten (133; 134) antreibbar sind, wobei zum Steuern der Flugbahn und/oder der Zugrichtung der Flugdrohne (9a; 9b) die Hydrostaten (133; 134) und damit die Drehzahl der damit verbundenen Rotoren individuell verstellt werden.

5. Verfahren nach einem der vorhergehenden Ansprüche, wobei die zumindest eine Flugdrohne (9a; 9b) derart gesteuert wird, dass eine Kraft (F) mit einer Horizontalkomponente (F_{H}) auf die Last (20) ausgeübt wird, wobei die Flugdrohne (9) derart gesteuert wird, dass die Horizontalkomponente (F_{H}) einer Pendelbewegung der Last (20) entgegenwirkt und/oder einer Windkraft entgegenwirkt und/oder ein Kranhubseil (7) in einer möglichst vertikalen Ausrichtung gehalten wird, und/oder die Flugdrohne (9) derart gesteuert wird, dass die Last (20) beim Heben um eine aufrechte Achse verdreht wird und die Flugdrohne (9) beim Heben der Last (20) entlang eines zumindest näherungsweise schraubenförmigen Wegs um eine aufrechte Achse durch die Last (20) geflogen wird.

6. Verfahren nach einem der vorhergehenden Ansprüche, wobei die Flugdrohne (9) in Abhängigkeit einer Kran- und/oder Kranlasthakenposition angesteuert wird derart, dass die Flugdrohne (9) Kran- und/oder Lasthakenbewegungen automatisch folgt und eine gewünschte Position relativ zu dem Kran und/oder Kranlasthaken auch bei Kranbewegungen hält, wobei die Position der Flugdrohne (9) relativ zu dem Kran (1) kontinuierlich oder zyklisch durch eine Positionsbestimmungseinrichtung (18) automatisch bestimmt wird, wobei die Flugdrohne (9) von einer Positionssteuervorrichtung (13) in Abhängigkeit eines Signals der Positionsbestimmungseinrichtung (18) angesteuert wird derart, dass die Relativposition zwischen Flugdrohne (9) und Kran zumindest näherungsweise konstant bleibt und/oder einem vorbestimmten Weg folgt.

7. Verfahren nach einem der vorhergehenden Ansprüche, wobei die Flugdrohne (9) in einem autonomen Steuermodus autonom ferngesteuert wird derart, dass von der Flugdrohne (9) verschiedene gewünschte Positionen relativ zu dem Kran (1) oder relativ zu einer Leitdrohne (9a) angeflogen wird.

8. Verfahren nach einem der vorhergehenden Ansprüche, wobei bestimmte Betriebparameter der zumindest einen Flugdrohne (9), insbesondere Rotordrehzal und/oder -anstellwinkel, von der Steuereinrichtung (5) so gesteuert werden, dass ein Lastaufnahmemittel an der Flugdrohne (9), das die Flugdrohne (9) mit der Last (20) oder dem Lasthaken (20) verbindet, mit einer gewünschten Kraft beaufschlagt wird, insbesondere mit einem bestimmten Kraftbetrag und/oder einer bestimmten Kraftrichtung beaufschlagt wird.

9. Vorrichtung zum Heben einer Last (20), umfassend einen Kran (1) und zumindest eine Flugdrohne (9), bei der die zumindest eine Flugdrohne (9) mit der Last (20) durch ein Lastaufnahmemittel zum Tragen zumindest eines Teils der Last (20) verbunden ist, wobei die Last (20) mit einem Lasthaken (8) des Krans (1) verbunden ist, **dadurch gekennzeichnet, dass** eine gemeinsame Steuereinrichtung (5) zum aufeinander abgestimmten Ansteuern der zumindest einen Flugdrohne (9a) zusammen mit dem Kran (1) vorgesehen ist.

10. Vorrichtung nach dem vorhergehenden Anspruch, wobei die gemeinsame Steuereinrichtung (5) eine Hauptsteuereinrichtung (5a) mit Eingabemitteln (19) zum Eingeben von Flug- und/oder Kranbewegungswünschen, von der aus auf Basis der eingegebenen Bewegungswünsche Steuersignale an die zumindest eine Flugdrohne (9a) und/oder den Kran (1) generiert und übermittelt werden, und eine Zusatzsteuereinrichtung (5b), die dazu konfiguriert ist, Steuerbefehle für die zumindest eine Flugdrohne (9a; 9b) in Abhängigkeit der Kranbewegungen, die von der Hauptsteuereinrichtung (5a) veranlasst wurden, zu generieren, aufweist.

11. Vorrichtung nach einem der vorhergehenden Ansprüche 9 oder 10, wobei die Steuereinrichtung (5) eine Positionssteuervorrichtung (13) aufweist, die ein automatisches Folgesteuermodul zum Ansteuern der Flugdrohne (9) in Abhängigkeit einer Kranposition und/oder einer Leitdrohnenposition derart, dass die Flugdrohne (9) Kran- und/oder Leitdrohnenbewegungen automatisch folgt und eine gewünschte Position relativ zum Kran und/oder zur Leitdrohne auch bei Kran- und/oder Leitdrohnenbewegungen bewegungen hält, besitzt, wobei die Steuereinrichtung (5) dazu konfiguriert ist, die Flugdrohne (9) so anzusteuern, dass die Flugdrohne (9) beim Heben der Last (20) entlang einer vorbestimmten Bahn relativ zum Kran, insbesondere entlang einer Schraubenbahn um eine aufrechte, durch die Last (20) gehende Achse, fliegt.

12. Vorrichtung nach einem der vorhergehenden Ansprüche 9 bis 11, wobei eine/die Positionssteuervorrichtung (13) ein autonomes Steuermodul zum autonomen Fernsteuern der Flugdrohne (9) derart, dass von der Flugdrohne (9) verschiedene gewünschte Positionen relativ zur Maschine und/oder deren Arbeitswerkzeug angeflogen wird, aufweist.

13. Vorrichtung nach einem der vorhergehenden Ansprüche 9 bis 12, wobei eine Positionsbestimmungseinrichtung (18) zum Bestimmen der Position der Flugdrohne (9) relativ zu dem Kran (1) und/oder relativ zu einer Leitdrohne vorgesehen ist, wobei eine/die Positionssteuervorrichtung (13) dazu ausgebildet ist, die Flugdrohne (9) in Abhängigkeit der automatisch bestimmten Relativposition zu steuern, wobei die Flugdrohne (9) eine GPS-Einheit zur absoluten Positionsbestimmung der Flugdrohne (9) aufweist, wobei die Positionssteuervorrichtung (13) zum Steuern der Position der Flugdrohne (9) relativ zur Maschine dazu ausgebildet ist, die Flugdrohne (9) in Abhängigkeit der absoluten Positionsdaten der Flugdrohne (9) und absoluter Positionsdaten der Materialumschlags- und/oder Baumaschine und/oder deren Arbeitswerkzeug zu steuern, wobei die Positionsbestimmungseinrichtung (18) eine Signal-Ortungsvorrichtung zum Orten eines von der Flugdrohne (9) abgegebenen Signals aufweist, wobei die genannte Signal-Ortungsvorrichtung an dem Kran angebrachte, voneinander beabstandete Sende-/Empfangseinheiten (15) zum Kommunizieren mit einer Sende-/Empfangseinheit (16) an der Flugdrohne (9) sowie eine Auswerteeinrichtung zum Auswerten der übertragenen Signale zwischen den kranseitigen Sende-/Empfangseinheiten (15) und der drohnenseitigen Sende-/Empfangseinheit (16) hinsichtlich vorbestimmter Signaleigenschaften, insbesondere hinsichtlich Signallaufzeit und/oder Signalstärke, und Bestimmen der Position der Flugdrohne (9) relativ zum Kran (1) aus den Signaleigenschaften aufweist.

14. Vorrichtung nach einem der vorhergehenden Ansprüche 9 bis 13, wobei die Flugdrohne (9) einen hydrostatischen Antriebsstrang (130) aufweist, der einen als Pumpe arbeitenden Hydrostaten (131), der von einem Antriebsmotor (132) antreibbar ist, sowie zumindest einen weiteren Hydrostaten (133, 134) umfasst, der mit einem Rotor der Flugdrohne antriebsverbunden ist, als Motor arbeitet und von dem als Pumpe arbeitenden Hydrostaten (131) mit Druck versorbar ist.

15. Vorrichtung nach dem vorhergehenden Anspruch, wobei als Antriebsmotor (132) ein Verbrennungsmotor (VKM) vorgesehen ist und/oder die Flugdrohne (9) als Multikopter ausgebildet ist und mehrere Rotoren aufweist, wobei der hydrostatische Antriebsstrang (130) mehrere als Motor arbeitende Hydrostaten (133, 134) umfasst, die jeweils mit einem Rotor antriebsverbunden sind und individuell verstellbar ausgebildet sind, um die mit den jeweiligen Hydrostaten verbundenen Rotoren individuell Drehzahl zu steuern.

## Claims

1. Method for lifting a load (20), in which at least one aerial drone (9) carries at least a portion of the load (20), wherein the load (20) is connected to a lifting hook (8) of a crane (1), and also carried and/or directed by the crane (1) in part, **characterized in that** the at least one aerial drone (9a) is controlled together with the crane (1), in a mutually coordinated manner, by means of a common controller (5) for controlling flight and/or crane movements.

2. Method according to the preceding claim, wherein the common controller (5) comprises a main controller (5a) having input means (19) for inputting desired flight and/or crane movements, from which control signals are generated and transmitted to the at least one aerial drone (9a) and/or the crane (1), on the basis of the input desired movements, and an additional controller (5b) from which control commands for the at least one aerial drone (9a; 9b) are generated and transmitted, depending on the flight or crane movements that were triggered by the main controller (5a).

3. Method according to either of the preceding claims, wherein a lifting and/or tensile force and/or a flight trajectory of the aerial drone (9a; 9b) is controlled by varying a rotor speed and/or a rotor torque, wherein the aerial drone (9a; 9b) comprises a hydrostatic drivetrain (130) for driving at least one rotor (120-127) comprising at least one hydrostatic device (131) that operates as a pump and can be driven by a drive motor (132), and at least one further hydrostatic device (133, 134) that operates as a motor and can be connected to the rotor, and the mentioned rotor speed and/or the rotor torque is controlled by adjusting a hydraulic control variable of the hydrostatic drivetrain (130), in particular a hydrostatic device displacement volume and/or a hydrostatic device swivel angle and/or a pressure in the hydrostatic pressure circuit and/or a mass flow in the hydrostatic pressure circuit.

4. Method according to the preceding claim, wherein an internal combustion engine is used as the drive motor (132) and is operated in an at least approximately constant operating state, in particular at least approximately in the full load range, wherein speed changes and/or torque changes on the rotor are controlled in a variable manner by means of adjusting the at least one hydrostatic device (133, 134; 131), wherein the aerial drone (9a; 9b) is designed as a multicopter and comprises a plurality of rotors which can in each case be driven by one hydrostatic device (133; 134), respectively, wherein the hydrostatic devices (133; 134), and thus the speed of the rotors connected thereto, are adjusted individually in order to control the flight trajectory and/or the pulling direction of the aerial drone (9a; 9b).

5. Method according to any of the preceding claims, wherein the at least one aerial drone (9a; 9b) is controlled such that a force (F) having a horizontal component (F_{H}) is exerted on the load (20), wherein the aerial drone (9) is controlled such that the horizontal component (F_{H}) counteracts a pendulum motion of the load (20) and/or counteracts a wind force, and/or a crane hoist rope (7) is held in as vertical an orientation as possible, and/or the aerial drone (9) is controlled such that the load (20) is rotated, while being lifted, about a vertical axis, and the aerial drone (9), while lifting the load (20), is flown along an at least approximately helical trajectory, about a vertical axis through the load (20).

6. Method according to any of the preceding claims, wherein the aerial drone (9) is actuated depending on a crane and/or crane lifting hook position such that the aerial drone (9) automatically follows crane and/or lifting hook movements and maintains a desired position relative to the crane and/or crane lifting hook, even in the event of crane movements, wherein the position of the aerial drone (9) relative to the crane (1) is automatically determined in a continuous or cyclical manner by a position determination means (18), wherein the aerial drone (9) is actuated by a position control device (13) on the basis of a signal of the position determination means (18) such that the relative position between the aerial drone (9) and crane remains at least approximately constant and/or follows a predetermined trajectory.

7. Method according to any of the preceding claims, wherein the aerial drone (9) is autonomously remotely controlled, in an autonomous control mode, such that the aerial drone (9) approaches various desired positions relative to the crane (1) and/or relative to a guide drone (9a).

8. Method according to any of the preceding claims, wherein specified operating parameters of the at least one aerial drone (9), in particular the rotor speed and/or angle of attack, are controlled by the controller (5) such that a load suspension device on the aerial drone (9) that connects the aerial drone (9) to the load (20) or the lifting hook (20), is subjected to a desired force, in particular having a specified force magnitude and/or a specified force direction.

9. Device for lifting a load (20), comprising a crane (1) and at least one aerial drone (9), in which the at least one aerial drone (9) is connected to the load (20) by means of a load suspension device for carrying at least a portion of the load (20), wherein the load (20) is connected to a lifting hook (8) of the crane (1), **characterized in that** a common controller (5) is provided for actuating the at least one aerial drone (9a) together with the crane (1) in a mutually coordinated manner.

10. Device according to the preceding claim, wherein the common controller (5) comprises a main controller (5a) having input means (19) for inputting desired flight and/or crane movements, from which control signals are generated and transmitted to the at least one aerial drone (9a) and/or the crane (1), on the basis of the input desired movements, and an additional controller (5b) which is designed to generate control commands for the at least one aerial drone (9a; 9b) depending on the crane movements that were triggered by the main controller (5a).

11. Device according to either of the preceding claims 9 or 10, wherein the controller (5) comprises a position control device (13) which comprises an automatic follow-up control module for actuating the aerial drone (9) depending on a crane position and/or a guide drone position, such that the aerial drone (9) automatically follows crane and/or guide drone movements and maintains a desired position relative to the crane and/or guide drone, even in the event of crane and/or guide drone movements, wherein the controller (5) is configured to actuate the aerial drone (9) such that, when lifting the load (20), the aerial drone (9) flies along a predetermined trajectory relative to the crane, in particular along a helical trajectory about a vertical axis passing through the load (20).

12. Device according to any of the preceding claims 9 to 11, wherein a/the position control device (13) comprises an autonomous control module for autonomous remote control of the aerial drone (9) such that the aerial drone (9) approaches various desired positions relative to the machine and/or the work tool thereof.

13. Device according to any of the preceding claims 9 to 12, wherein a position determination means (18) for determining the position of the aerial drone (9) relative to the crane (1) and/or relative to a guide drone is provided, wherein a/the position control device (13) is designed to control the aerial drone (9) depending on the automatically determined relative position, wherein the aerial drone (9) comprises a GPS unit for absolute position determination for the aerial drone (9), wherein the position control device (13) for controlling the position of the aerial drone (9) relative to the machine is designed to control the aerial drone (9) depending on the absolute position data of the aerial drone (9) and absolute position data of the material handling and/or construction machine, and/or the work tool thereof, wherein the position determination means (18) comprises a signal-locating means for locating a signal output by the aerial drone (9), wherein the mentioned signal-locating means comprises mutually spaced transceiver units (15) that are attached to the crane and are intended for communicating with a transceiver unit (16) on the aerial drone (9), and an evaluation unit for evaluating the transmitted signals between the transceiver units (15) on the crane side and the transceiver unit (16) on the drone side, with respect to predetermined signal characteristics, in particular with respect to the signal propagation time and/or signal strength, and for determining the position of the aerial drone (9) relative to the crane (1) from the signal characteristics.

14. Device according to any of the preceding claims 9 to 13, wherein the aerial drone (9) comprises a hydrostatic drivetrain (130) which comprises a hydrostatic device (131) that operates as a pump and can be driven by a drive motor (132), and at least one further hydrostatic device (133, 134) which is drivingly connected to a rotor of the aerial drone, operates as a motor, and by means of which the hydrostatic device (131) operating as a pump can be supplied with pressure.

15. Device according to the preceding claim, wherein an internal combustion engine (ICE) is provided as the drive motor (132), and/or the aerial drone (9) is designed as a multicopter and comprises a plurality of rotors, wherein the hydrostatic drivetrain (130) comprises a plurality of hydrostatic devices (133, 134) that operate as motors and are each drivingly connected to one rotor, respectively, and are designed so as to be individually adjustable in order to individually control the speed of the rotors connected to the respective hydrostatic devices.

## Revendications

1. Procédé pour lever une charge (20), où au moins un drone aérien (9) porte au moins une partie de la charge (20), dans lequel la charge (20) est reliée à un crochet de levage (8) d'une grue (1) et est portée et dirigée en partie par la grue (1), **caractérisé en ce que** l'au moins un drone aérien (9a) est piloté conjointement avec la grue (1) par un système de commande (5) commun destiné à commander des déplacements aériens et de grue de manière adaptée les uns aux autres.

2. Procédé selon la revendication précédente, dans lequel le système de commande (5) commun présente un système de commande principal (5a) avec des moyens d'entrée (19) pour entrer des souhaits de déplacement aérien et/ou de grue, depuis lequel, sur la base des souhaits de déplacement entrés, des signaux de commande sont générés et transmis à l'au moins un drone aérien (9a) et/ou à la grue (1), et un système de commande supplémentaire (5b), depuis lequel des instructions de commande sont générées et transmises pour l'au moins un drone aérien (9a ; 9b) en fonction des déplacements aériens ou de grue, qui ont été déclenchés par le système de commande principal (5a).

3. Procédé selon l'une quelconque des revendications précédentes, dans lequel une force de levage et/ou une force de traction et/ou une trajectoire de vol du drone aérien (9a ; 9b) sont commandées par une variation d'une vitesse de rotation de rotor et/ou d'un couple de rotation de rotor, dans lequel le drone aérien (9a ; 9b) présente une chaîne cinématique hydrostatique (130) destinée à entraîner au moins un rotor (120-127) comprenant au moins un hydrostat (131) fonctionnant en tant que pompe, qui peut être entraîné par un moteur d'entraînement (132), et au moins un autre hydrostat (133, 134) fonctionnant en tant que moteur, qui peut être relié au rotor, et la vitesse de rotation de rotor mentionnée et/ou le couple de rotation de rotor sont commandés par ajustement d'une grandeur de réglage hydraulique de la chaîne cinématique hydrostatique (130), en particulier d'un volume d'absorption d'hydrostat et/ou d'un angle de pivotement d'hydrostat et/ou d'une pression dans le circuit de pression hydrostatique et/ou d'un flux massique dans le circuit de pression hydrostatique.

4. Procédé selon la revendication précédente, dans lequel un moteur à combustion interne est utilisé en tant que moteur d'entraînement (132) et fonctionne dans un état de fonctionnement au moins approximativement constant, en particulier au moins approximativement dans la plage de plein régime, dans lequel des modifications de vitesse de rotation et/ou des modifications de couple de rotation sont commandées de manière variable sur le rotor par ajustement de l'au moins un hydrostat (133, 134 ; 131), dans lequel le drone aérien (9a ; 9b) est réalisé en tant que multicoptère et présente plusieurs rotors, qui peuvent être entraînés respectivement par un hydrostat (133 ; 134), dans lequel pour commander la trajectoire de vol et/ou la direction de traction du drone aérien (9a ; 9b), les hydrostats (133 ; 134) et ainsi la vitesse de rotation des rotors qui leur sont associés sont ajustés individuellement.

5. Procédé selon l'une quelconque des revendications précédentes, dans lequel l'au moins un drone aérien (9a ; 9b) est commandé de telle manière qu'une force (F) avec une composante horizontale (F_{H}) est exercée sur la charge (20), dans lequel le drone aérien (9) est commandé de telle manière que la composant horizontale (F_{H}) contrecarre un mouvement pendulaire de la force (20) et/ou contrecarre une force du vent et/ou un câble de levage de grue (7) est maintenu dans une orientation la plus verticale possible, et/ou le drone aérien (9) est commandé de telle manière que la charge (20) est tournée lors du levage autour d'un axe vertical et le drone aérien (9) traverse en vol la charge (20) lors du levage de la charge (20) le long d'un trajet au moins approximativement hélicoïdal autour d'un axe vertical.

6. Procédé selon l'une quelconque des revendications précédentes, dans lequel le drone aérien (9) est piloté en fonction d'une position de grue et/ou de crochet de levage de grue de telle manière que le drone aérien (9) suit automatiquement des déplacements de grue et/ou de crochet de levage de grue et garde une position souhaitée par rapport à la grue et/ou au crochet de levage de grue également lors de déplacements de grue, dans lequel la position du drone aérien (9) par rapport à la grue (1) est définie automatiquement en continu ou de manière cyclique par un système de définition de position (18), dans lequel le drone aérien (9) est piloté par un dispositif de commande de position (13) en fonction d'un signal du système de définition de position (18) de telle manière que la position relative reste au moins approximativement constante entre le drone aérien (9) et la grue et/ou suit un trajet prédéfini.

7. Procédé selon l'une quelconque des revendications précédentes, dans lequel le drone aérien (9) est commandé à distance de manière autonome dans un mode de commande autonome de telle manière que différentes positions souhaitées par rapport à la grue (1) ou par rapport à un drone de guidage (9a) sont approchées par le drone aérien (9).

8. Procédé selon l'une quelconque des revendications précédentes, dans lequel certains paramètres de fonctionnement de l'au moins un drone aérien (9), en particulier la vitesse de rotation de rotor et/ou l'incidence, sont commandés par le système de commande (5) de telle sorte qu'un moyen de réception de charge sur le drone aérien (9), qui relie le drone aérien (9) à la charge (20) ou au crochet de levage (20), est soumis à l'action d'une force souhaitée, en particulier est soumis à l'action d'une force présentant une valeur définie et/ou d'une direction de force définie.

9. Dispositif de levage d'une charge (20), comprenant une grue (1) et au moins un drone aérien (9), où l'au moins un drone aérien (9) est relié à la charge (20) par un moyen de réception de charge destiné à porter au moins une partie de la charge (20), dans lequel la charge (20) est reliée à un crochet de levage (8) de la grue (1), **caractérisé en ce qu'**un système de commande (5) commun est prévu pour piloter de manière adaptée l'un à l'autre l'au moins un drone aérien (9a) conjointement avec la grue (1).

10. Dispositif selon la revendication précédente, dans lequel le système de commande (5) commun présente un système de commande principal (5a) avec des moyens d'entrée (19) destinés à entrer des souhaits de déplacement en vol et/ou de grue, depuis lequel, sur la base des souhaits de déplacement entrés, des signaux de commande sont générés et transmis à l'au moins un drone aérien (9a) et/ou à la grue (1), et un système de commande supplémentaire (5b), qui est configuré pour générer des instructions de commande pour l'au moins un drone aérien (9a ; 9b) en fonction des déplacements de grue, qui ont été déclenchés par le système de commande principal (5a).

11. Dispositif selon l'une quelconque des revendications précédentes 9 ou 10, dans lequel le système de commande (5) présente un dispositif de commande de position (13), qui possède un module de commande de suivi automatique pour piloter le drone aérien (9) en fonction d'une position de grue et/ou d'une position de drone de guidage de telle manière que le drone aérien (9) suit automatiquement des déplacements de grue et/ou de drone de guidage et maintient une position souhaitée par rapport à la grue et/ou par rapport au drone de guidage également lors de déplacements de grue et/ou de drone de guidage, dans lequel le système de commande (5) est configuré pour piloter le drone aérien (9) de telle sorte que le drone aérien (9) effectue un vol lors du levage de la charge (20) le long d'une trajectoire prédéfinie par rapport à la grue, en particulier le long d'une trajectoire hélicoïdale autour d'un axe vertical traversant la charge (20).

12. Dispositif selon l'une quelconque des revendications précédentes 9 à 11, dans lequel un/le dispositif de commande de position (13) présente un module de commande autonome pour commander à distance de manière autonome le drone aérien (9) de telle manière que différentes positions souhaitées par rapport à la machine et/ou à son outil de travail sont approchées par le drone aérien (9).

13. Dispositif selon l'une quelconque des revendications précédentes 9 à 12, dans lequel un système de définition de position (18) est prévu pour définir la position du drone aérien (9) par rapport à la grue (1) et/ou par rapport à un drone de guidage, dans lequel un/le dispositif de commande de position (13) est réalisé pour commander le drone aérien (9) en fonction de la position relative définie automatiquement, dans lequel le drone aérien (9) présente une unité GPS pour définir de manière absolue la position du drone aérien (9), dans lequel le dispositif de commande de position (13) est réalisé pour commander la position du drone aérien (9) par rapport à la machine, pour commander le drone aérien (9) en fonction des données de position absolues du drone aérien (9) et de données de position absolues de la machine de transbordement de matériau et/ou de construction et/ou de son outil de travail, dans lequel le système de définition de position (18) présente un dispositif de localisation de signaux pour localiser un signal émis par le drone aérien (9), dans lequel ledit dispositif de localisation de signaux présente des unités d'envoi/de réception (15) installées sur la grue, tenues à distance les unes des autres pour communiquer avec une unité d'envoi/de réception (16) sur le drone aérien (9) ainsi qu'un système d'évaluation pour évaluer les signaux transmis entre les unités d'envoi/de réception du côté de la grue (15) et l'unité d'envoi/de réception du côté du drone (16) quant à des propriétés de signaux prédéfinies, en particulier quant au temps de propagation de signaux et/ou à l'intensité de signal, et/ou pour définir la position du drone aérien (9) par rapport à la grue (1) à partir des propriétés de signaux.

14. Dispositif selon l'une quelconque des revendications précédentes 9 à 13, dans lequel le drone aérien (9) présente une chaîne cinématique hydrostatique (130), qui comprend un hydrostat (131) fonctionnant en tant que pompe, qui peut être entraîné par un moteur d'entraînement (132), ainsi qu'au moins un autre hydrostat (133, 134), qui est relié en entraînement à un rotor du drone aérien, fonctionne en tant que moteur et peut être alimenté en pression par l'hydrostat (131) fonctionnant en tant que pompe.

15. Dispositif selon la revendication précédente, dans lequel un moteur à combustion interne (VKM) est prévu en tant que moteur d'entraînement (132) et/ou le drone aérien (9) est réalisé en tant que multicoptère et présente plusieurs rotors, dans lequel la chaîne cinématique hydrostatique (130) comprend plusieurs hydrostats (133, 134) fonctionnant en tant que moteur, qui sont reliés en entraînement respectivement à un rotor et sont réalisés individuellement de manière ajustable pour commander individuellement la vitesse de rotation avec des rotors reliés aux hydrostats respectifs.
